# EUROPÄISCHE PATENTANMELDUNG

(11) **EP 0 901 938 A1**
(43) Veröffentlichungstag der Anmeldung: **17.03.1999**
(21) Anmeldenummer: 98114999.0
(22) Anmeldetag: 10.08.1998
(51) Int. Cl.: B60R 11/00

(54) **Behälterarretierung für Fahrzeuge**

(30) Priorität: 15.09.1997 DE 19740470
(71) Anmelder: MAN Nutzfahrzeuge Aktiengesellschaft, 80976 München (DE)
(72) Erfinder: Burger, Norbert, 84030 Ergolding (DE); Tittel, Matthias, 85253 Erdweg (DE)

(57) **Zusammenfassung**

Die Erfindung betrifft eine Behälterarretierung für Fahrzeuge zur Befestigung von Behältern (1) an einem Tragelement mittels wenigstens eines abschnittsweise auf dem Umfang des Behälters (1) anliegenden, flexiblen Spannelementes (2). Der Erfindung liegt die Aufgabe zugrunde, für Behälter von Fahrzeugen eine funktionssichere Befestigung hoher Zuverlässigkeit und vereinfachter Montage zu schaffen. Diese Aufgabe wird erfindungsgemäß dadurch gelöst, daß das flexible Spannelement (2) entweder unmittelbar oder mittels einer schwingungsdämpfenden Unterlage (4) zumindest bereichsweise in formschlüssiger Anlage mit wenigstens einer in den Behälter (1) eingebrachten, umlaufenden Sicke (3/1, 3/2, 3/3) zwecks Halterung und Axialfixierung des Behälters (1) korrespondiert, oder daß das flexible Spannelement (2) entweder unmittelbar oder mittels einer das Spannelement (2) formschlüssig untergreifenden, schwingungsdämpfenden Unterlage (4) einerseits flankenseitig an wenigstens einem, an dem Behälter (1) umfangsseitig umlaufenden Absatz (11, 14) und andererseits flankenseitig an einem umfangsseitig des Behälters (1) umlaufenden äußeren Falz (12) zwecks Halterung und Axialfixierung des Behälters (1) formschlüssig zur Anlage kommt.

## Beschreibung

Die Erfindung betrifft eine Behälterarretierung für Fahrzeuge gemäß dem Oberbegriff des Anspruches 1.

Bei Fahrzeugen werden Behälter, z. B. Druckluftkessel, Kraftstoffbehälter, Luftfilter, Abgasanlagen usw. mittels an ihrem Umfang angeordneter Spannelemente an einer geeigneten Tragkonstruktion angebracht. Die Qualität dieser Verbindung wird durch das Anzugsmoment am Spannelement und die Reibkraft zwischen Bauteil und einer Schelle des Spannelementes bestimmt. Nicht selten kann es im Laufe des Fahrbetriebes des Fahrzeuges zu einer Relativbewegung zwischen Spannelement und dem hierdurch gehaltenen Behälter kommen. Das Ergebnis kann eine undefinierte Position des Behälters oder gar ein Lösen desselben im Schadensfall sein. Erschwerend wirkt bei der Befestigung des Behälters die Rückfederung seines Hohlkörpers infolge zu geringer Stützkräfte. Zudem können an dem Behälter keine definierten Drehmomente realisiert werden, da Einschnürungen im Spannbereich des Behälters befürchtet werden müssen.

Aus der DE 196 23 844 A1 ist eine Befestigung eines Behälters an einem Fahrzeug bekannt, die eine den Behälter tragende, an einem Fahrgestell des Fahrzeuges fest angebrachte Halterung aufweist. Hierbei ist sowohl der Behälter als auch die Halterung von einem, den Behälter fixierenden Spannelement umschlossen. Die Halterung weist zwei in Axialrichtung zueinander beabstandete Wulste auf, die vom Behälter nach außen gerichtet sind und die Montage des Spannelementes erleichtern sowie dieses an der richtigen Stelle auf dem Behälter zentrieren. Der Behälter ist durch das Spannelement infolge eines Reibschlusses axial fixiert.

Der Erfindung liegt die Aufgabe zugrunde, für Behälter von Fahrzeugen eine funktionssichere Befestigung hoher Zuverlässigkeit und vereinfachter Montage zu schaffen.

Diese Aufgabe wird erfindungsgemäß durch die Merkmale des Anspruches 1 und des Anspruches 2 gelöst.

Mit der erfindungsgemäßen Behälterarretierung ist eine zuverlässige Abstützung und Sicherung dynamisch beanspruchter Behälter an Fahrzeugen gegeben. Gemäß Anspruch 1 ist wenigstens ein zumindest abschnittsweise auf dem Umfang des Behälters anliegendes, flexibles Spannelement entweder unmittelbar oder mittels einer schwingungsdämpfenden Unterlage zumindest bereichsweise in formschlüssige Anlage mit wenigstens einer an dem Behälter vorgesehenen, umfangsseitig umlaufenden Sicke zwecks Halterung und Axialfixierung des Behälters an einem Tragelement des Fahrzeugs bringbar. Der Behälter ist somit durch integrierten Form- und Reibschluß an diesem Tragelement mit hoher Zuverlässigkeit befestigbar. Durch den Formschluß von Sicke und Spannelement ist gegenüber bekannten Behälterarretierungen eine deutlich verbesserte Axialfixierung des Behälters gegeben. Als Behälter können Kraftstoffbehälter, Druckluftkessel, Abgasanlagen oder dergleichen verwendet sein. Das flexible Spannelement kann durch ein Spannband gegeben sein.

Gemäß Anspruch 2 kommt das flexible Spannelement entweder unmittelbar oder mittels einer das Spannelement formschlüssig untergreifenden, schwingungsdämpfenden Unterlage einerseits flankenseitig an wenigstens einem, an dem Behälter vorgesehenen, umfangsseitig umlaufenden Absatz und andererseits flankenseitig an einem umfangsseitig des Behälters umlaufenden äußeren Falz zwecks Halterung und Axialfixierung des Behälters zur formschlüssigen Anlage. Die sich hieraus ergebenden Vorteile und Anwendungsmöglichkeiten entsprechen dem vorstehend beschriebenen Lösungsprinzip gemäß Anspruch 1.

Gemäß einer weiterführenden Ausgestaltung der Erfindung nach Anspruch 2 kann die schwingungsdämpfende Unterlage den umfangsseitig des Behälters umlaufenden äußeren Falz komplett formschlüssig überdecken und einfassen. Die Unterlage kann sich hierbei zusätzlich einerseits an dem am Behälter gebildeten Absatz und andererseits an einem Rücken des Falzes abstützen. Der Falz kann bei der Anbringung eines Bodens oder dergleichen am Mantel des Behälters gebildet sein.

Gemäß einer weiterführenden Ausgestaltung der Erfindung nach Anspruch 2 kann die das Spannelement aufnehmende und den Falz einfassend überdeckende Unterlage beidseitig des Spannelementes durch am Behälter gebildete Absätze eingefaßt und abgestützt sein. Das Spannelement kann alternativ unmittelbar auf dem Umfang des Behälters aufliegen und sich in axialer Richtung einerseits flankenseitig an dem am Behälter gebildeten Absatz und andererseits flankenseitig an dem Rücken des Falzes abstützen.

Gemäß einer weiterführenden Ausgestaltung der Erfindung nach Anspruch 1 kann der Behälter an seinem Umfang mindestens ein Paar nach außen gewölbter, umlaufender Sicken aufweisen, die in etwa der Breite des Spannelementes zueinander beabstandet, zwischen ihren einander zugewandten Flanken entweder das Spannelement oder die das Spannelement formschlüssig untergreifende Unterlage formschlüssig aufnehmen. Auf dem Umfang des Behälters können bedarfsweise zwei oder mehrere Sickenpaare in geeignetem Abstand zueinander angeordnet werden.

Gemäß einer weiteren Ausgestaltung der Erfindung nach Anspruch 1 kann der Behälter wenigstens eine einwärts gewölbte Sicke aufweisen, in die wenigstens bereichsweise entweder eine komplementär hierzu ausgebildete, das Spannelement formschlüssig untergreifende Unterlage oder wenigstens bereichsweise eine Unterseite des Spannelementes formschlüssig eingreift

Gemäß einer weiteren Ausgestaltung der Erfindung nach Anspruch 1 kann die komplette Unterseite des Spannelementes entweder unmittelbar oder über die Unterlage formschlüssig von der komplementär hierzu ausgebildeten Sicke des Behälters aufgenommen sein. Der Querschnitt der Sicke kann dabei etwa auf den Querschnitt des Spannelementes und/oder der Unterlage abgestimmt sein.

Gemäß einer weiteren Ausgestaltung der Erfindung nach Anspruch 1 kann das Spannelement unterseitig eine in seiner Längsrichtung verlaufende, abragende Noppe aufweisen, die entweder unmittelbar oder über die Unterlage mit der Sicke formschlüssig korrespondiert.

Gemäß einer weiteren Ausgestaltung der Erfindung nach Anspruch 1 kann die Noppe einstückig mit dem Spannelement gebildet sein und in dessen Längsrichtung verlaufende zueinander beabstandete Auswölbungen aufweisen.

Gemäß einer weiteren Ausgestaltung der Erfindung nach Anspruch 1 kann die Noppe ein separates Bauteil sein, das durchgehend oder partiell ausgebildet an dem Spannelement befestigt ist. Die Noppe kann aus einem vom Spannelement verschiedenen Werkstoff, beispielsweise Kunststoff, bestehend sein.

Gemäß einer weiteren Ausgestaltung der Erfindung nach Anspruch 1 oder Anspruch 2 kann der Behälter und/oder das Spannelement im gegenseitigen Kontaktbereich eine wenigstens bereichsweise erhöhte Oberflächenrauhigkeit aufweisen. Diese kann durch Rillen oder andere geometrische Flächen gegeben sein.

Gemäß einer weiteren Ausgestaltung der Erfindung nach Anspruch 1 oder Anspruch 2 kann die schwingungsdämpfende Unterlage für das Spannelement aus einem Kunststoff oder dergleichen bestehen. Als Kunststoff kann beispielsweise ein Elastomer verwendet sein. Die Unterlage kann in den Bereichen ihrer Auflageflächen eine erhöhte Oberflächenrauhigkeit aufweisen.

Gemäß einer weiteren Ausgestaltung der Erfindung nach Anspruch 1 kann innerhalb des Behälters wenigstens eine in dessen Querrichtung angeordnete Trennwand zwecks ihrer Befestigung mit einem zu der wenigstens einen Sicke des Behälters komplementär ausgebildeten Abschnitt an der Innenseite des Behälters formschlüssig anliegen. Somit kann in vorteilhafter Weise eine der Stabilität und der Befestigung dienende Sicke zusätzlich zur Befestigung bzw. Fixierung behälterinterner Trennwände genutzt werden.

Nachfolgend ist die erfindungsgemäße Lösung anhand in der Zeichnung dargestellter Ausführungsbeispiele näher erläutert.

Es zeigen:
- Fig. 1: eine erste Variante einer Behälterarretierung für einen Behälter eines Fahrzeuges,
- Fig. 2: schematisch einen vergrößerten Ausschnitt gemäß Fig. 1,
- Fig. 3: schematisch einen vergrößerten Ausschnitt gemäß Fig. 1, mit einer ein Spannband formschlüssig untergreifenden, schwingungsdämpfenden Unterlage,
- Fig. 4: ausschnittsweise eine zweite Variante einer Behälterarretierung mit einer ein Spannband formschlüssig untergreifenden Unterlage,
- Fig. 5: ausschnittsweise eine dritte Variante einer Behälterarretierung,
- Fig. 6: ausschnittsweise eine Behälterarretierung gemäß Fig. 5, mit einer ein Spannband formschlüssig untergreifenden Unterlage,
- Fig. 7: ausschnittsweise eine vierte Variante einer Behälterarretierung, mit einer ein Spannband formschlüssig untergreifenden, sich an einem Absatz, sowie einem Falz des Behälters abstützenden Unterlage und
- Fig. 8: ausschnittsweise eine fünfte Variante einer Behälterarretierung gemäß Fig. 7.

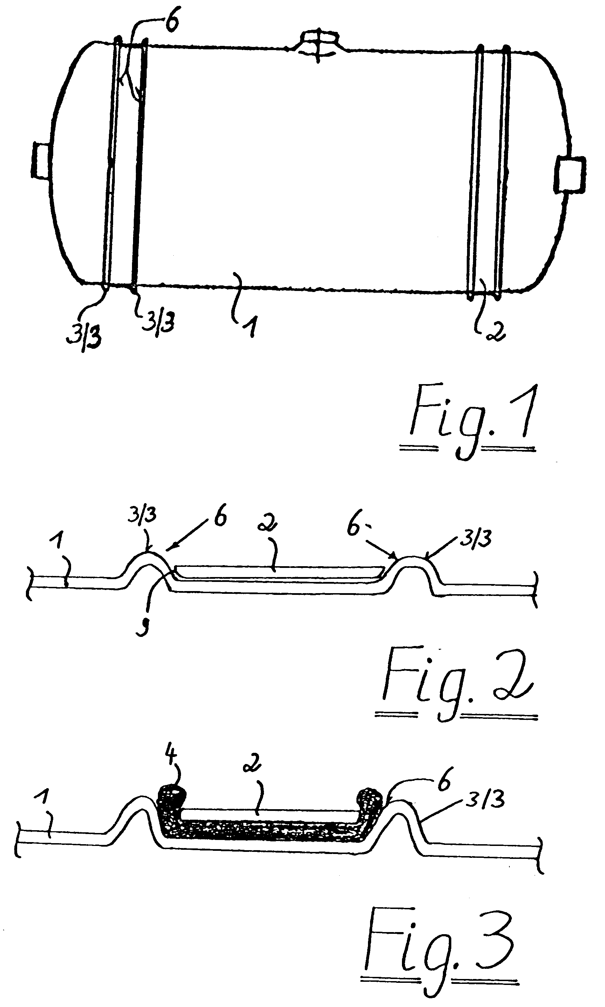

In Fig. 1 ist in Seitenansicht eine Behälterarretierung zur Befestigung eines Behälters 1 an einem Tragelement eines Fahrzeuges dargestellt. Die Behälterarretierung weist in dieser Version zwei auf dem Umfang des Behälters 1 anliegende, flexible Spannelemente 2 auf. Die zueinander beabstandet angeordneten Spannelemente 2 liegen sowohl auf dem Umfang des Behälters 1 als auch an dessen umlaufenden Sicken 3/3 zwecks Halterung des Behälters 1 am Fahrzeugteil formschlüssig an.

Dabei schließen die an dem Umfang des Behälters 1 umlaufenden, nach außen gewölbten Sicken 3/3 jeweils paarweise mit ihren einander zugewandten Flanken 6 das jeweilige Spannelement 2 formschlüssig ein und fixieren dieses in axialer Richtung des Behälters 1. Die jeweils paarweise angeordneten Sicken 3/3 sind in etwa der Breite des Spannelementes 2 zueinander beabstandet.

In Fig. 2 ist schematisch ein vergrößerter Ausschnitt der Behälterarretierung gemäß Fig. 1 gezeigt. Das Spannelement 2 liegt hierbei unmittelbar auf der Oberfläche des Behälters 1 auf und kommt mit seinen Randbereichen formschlüssig an den einander zugewandten Flanken 6 der Sicken 3/3 zur Anlage. Zur Verbesserung dieser Anlage zwischen Spannelement 2 und den Sicken 3/3 ist gegebenenfalls in den Randbereichen des Spannelementes 2 eine leichte Anrollung 9 vorgesehen. Diese kann in das Spannelement 2 bereits eingearbeitet sein.

Fig. 3 zeigt schematisch einen vergrößerten Ausschnitt einer Variante einer Behälterarretierung gemäß Fig. 1. Hiebei ist ein Spannelement 2 von einer schwingungsdämpfenden, einen etwa U-förmigen Querschnitt aufweisenden Unterlage 4 untergriffen. Diese faßt eine Unterseite des Spannelementes 2 formschlüssig ein. Die Unterlage 4 liegt auf der Oberfläche des Behälters 1 auf und stützt sich zusätzlich an den Flanken 6 der Sicken 3/3 ab.

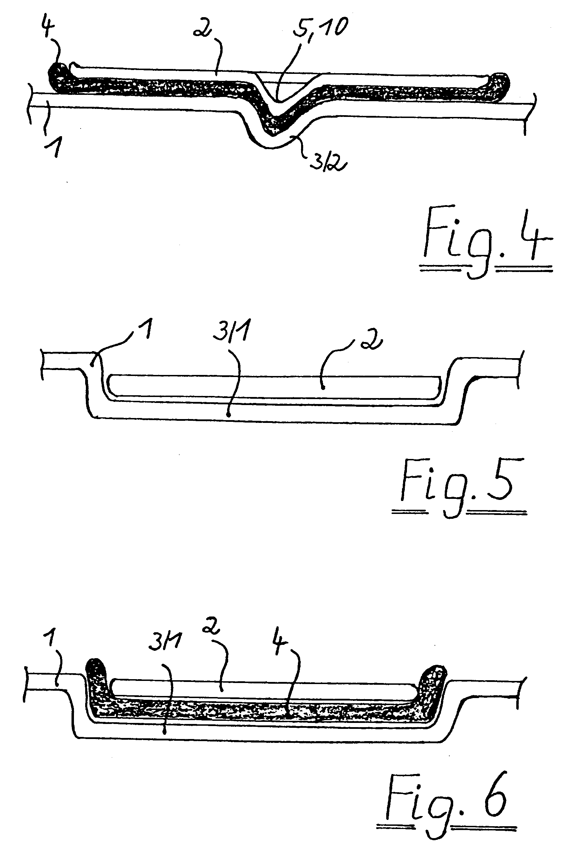

Fig. 4 zeigt eine weitere Variante einer Behälterarretierung mit einer ein Spannelement 2 formschlüssig untergreifenden Unterlage 4. In dieser Version weist das Spannelement 2 unterseitig eine in seiner Längsrichtung verlaufende, abragende Noppe 5 auf, die über die Unterlage 4 mit einer einwärts des Behälters 1 gewölbten Sicke 3/2 formschlüssig korrespondiert. Die Noppe 5 ist in dieser Version einstückig mit dem Spannelement 2 gebildet und an diesem durch zueinander beabstandete Auswölbungen 10 gebildet. Das eine Noppe 5 aufweisende Spannelement 2 ist von der komplementär hierzu ausgebildeten Unterlage 4 formschlüssig untergriffen und eingefaßt. Die Unterlage 4 greift formschlüssig in die einwärts des Behälters 1 gewölbte Sicke 3/3 ein.

Gemäß einer anderen, hier nicht gezeigten Version, kann die Noppe 5 ein separates, an dem Spannelement 2 befestigtes, durchgehend oder partiell ausgebildetes Bauteil unterschiedlichen Werkstoffes sein.

Fig. 5 zeigt eine einwärts des Behälters 1 gewölbte Sicke 3/1, die zur Aufnahme des in dieser formschlüssig einliegenden Spannelementes 2 auf die Breite des Spannelementes 2 abgestimmt ist.

Gemäß einer in Fig. 6 gezeigten Version kann das in der Sicke 3/1 formschlüssig einliegende Spannelement 2 von einer Unterlage 4 unterlegt und formschlüssig eingefaßt sein. Dabei liegt die Unterlage 4 formschlüssig in der Sicke 3/1 ein und dämpft die Schwingungen zwischen Behälter 1 und Spannelement 2 ab.

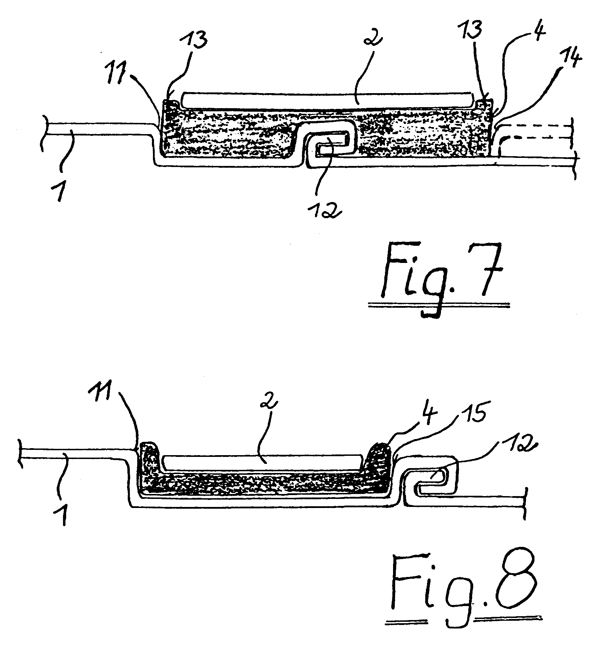

In Fig. 7 stützt sich die das Spannelement 2 formschlüssig einfassende Unterlage 4 einerseits flankenseitig an einem im Behälter 1 vorgesehenen umlaufenden Absatz 11 und andererseits flankenseitig an einem am Behälter 1 vorhandenen umlaufenden Falz 12 ab. Der Absatz 11 weist gegenüber dem übrigen Abschnitt des Behälters 1 einen geringeren Durchmesser auf. Der Falz 12 ist an dem Mantel des Behälters 1 gebildet und in dieser Version vollständig und formschlüssig von der Unterlage 4 umgriffen. Auf diese Weise ist die Unterlage 4 mit hoher Zuverlässigkeit in axialer Richtung des Behälters 1 an diesem fixiert. Die Unterlage 4 weist in dieser Version zur zusätzlichen Axialfixierung des Spannelementes 2 die dieses einfassende Vorsprünge 13 auf.

Gemäß der in Fig. 7 strichliert ausgeführten Version ist die Unterlage 4 durch einen weiteren, unfangsseitig des Behälters 1 vorgesehenen, umlaufenden Absatz 14 zusätzlich axial fixiert. Die beiden Absätze 11, 14 sind auf die Breite der Unterlage 4 abgestimmt und nehmen diese formschlüssig auf. Infolge der versenkten Anordnung der Absätze 11, 14 kann der umlaufende Falz 12 in etwa innerhalb der Außenkontur des Behälters 1 angeordnet werden. Die Unterlage 4 und das auf dieser von den Vorsprüngen 13 gehaltene Spannelement 2 ist hierbei sowohl von dem Falz 12 als auch von den Absätzen 11, 14 fixiert.

Fig. 8 zeigt eine ein Spannelement 2 einfassende Unterlage 4, die zwischen dem Absatz 11 und einem Rücken 15 eines Falzes 12 zur formschlüssigen Anlage kommt. Gemäß einer hier nicht gezeigten Version, kann die Unterlage 4 auch entfallen.

Unabhängig von der Ausführungsart der Sicken und des Spannelementes kann der Behälter 1 und/oder das Spannelement 2 im gegenseitigen Kontaktbereich eine erhöhte Oberflächenrauhigkeit aufweisen. Die Oberfläche im Kontaktbereich kann beispielsweise strukturiert sein und Rillen oder andere geometrische Flächen aufweisen. Als schwingungsdämpfende Unterlage 4 können Kunststoffe, beispielsweise Elastomere oder dergleichen verwendet sein.

## Patentansprüche

1. Behälterarretierung für Fahrzeuge, zur Befestigung von Behältern (1) an einem Tragelement mittels wenigstens eines abschnittsweise auf dem Umfang des Behälters (1) anliegenden, flexiblen Spannelementes (2), dadurch gekennzeichnet, daß das flexible Spannelement (2) entweder unmittelbar oder mittels einer das Spannelement (2) formschlüssig untergreifenden, schwingungsdämpfenden Unterlage (4) zumindest bereichsweise in formschlüssiger Anlage mit wenigstens einer in den Behälter (1) eingebrachten, umfangsseitig umlaufenden Sicke (3/1, 3/2, 3/3) zwecks Halterung und Axialfixierung des Behälters (1) korrespondiert.

2. Behälterarretierung für Fahrzeuge, zur Befestigung von Behältern (1) an einem Tragelement mittels wenigstens eines abschnittsweise auf dem Umfang des Behälters (1) anliegenden, flexiblen Spannelementes (2), dadurch gekennzeichnet, daß das flexible Spannelement (2) entweder unmittelbar oder mittels einer das Spannelement (2) formschlüssig untergreifenden, schwingungsdämpfenden Unterlage (4) einerseits flankenseitig an wenigstens einem, an dem Behälter (1) umfangsseitig umlaufenden Absatz (11, 14) und andererseits flankenseitig an einem umfangsseitig des Behälters (1) umlaufenden äußeren Falz (12) zwecks Halterung und Axialfixierung des Behälters (1) formschlüssig zur Anlage kommt.

3. Behälterarretierung nach Anspruch 1, dadurch gekennzeichnet, daß der Behälter (1) an seinem Umfang mindestens ein Paar nach außen gewölbter umlaufender Sicken (3/3) aufweist, die in etwa der Breite des Spannelementes (2) zueinander beabstandet, zwischen ihren einander zugewandten Flanken (6) entweder das Spannelement (1) oder die das Spannelement (1) formschlüssig untergreifende Unterlage (4) formschlüssig aufnehmen.

4. Behälterarretierung nach Anspruch 1, dadurch gekennzeichnet, daß der Behälter (1) wenigstens eine einwärts gewölbte Sicke (3/1, 3/2) aufweist, in die wenigstens bereichsweise entweder eine komplementär hierzu ausgebildete, das Spannelement (2) formschlüssig untergreifende Unterlage (4) oder wenigstens bereichsweise eine Unterseite des Spannelementes (2) formschlüssig eingreift.

5. Behälterarretierung nach Anspruch 4, dadurch gekennzeichnet, daß die komplette Unterseite des Spannelementes (2) entweder unmittelbar oder über die Unterlage (4) formschlüssig von der komplementär hierzu ausgebildeten Sicke (3/1) aufgenommen ist.

6. Behälterarretierung nach Anspruch 4, dadurch gekennzeichnet, daß das Spannelement (2) unterseitig eine in seiner Längsrichtung verlaufende, abragende Noppe (5) aufweist, die entweder unmittelbar oder über die Unterlage (4) mit der Sicke (3/2) formschlüssig korrespondiert.

7. Behälterarretierung nach Anspruch 6, dadurch gekennzeichnet, daß die Noppe (5) einstückig mit dem Spannelement (2) gebildet ist und in dessen Längsrichtung verlaufende, zueinander beabstandete Auswölbungen (10) aufweist.

8. Behälterarretierung nach Anspruch 6, dadurch gekennzeichnet, daß die Noppe (5) ein separates Bauteil ist, das durchgehend oder partiell ausgebildet, an dem Spannelement (2) befestigt ist.

9. Behälterarretierung nach Anspruch 2, dadurch gekennzeichnet, daß die schwingungsdämpfende Unterlage (4) den umfangsseitig des Behälters (1) umlaufenden äußeren Falz (12) komplett formschlüssig einfaßt.

10. Behälterarretierung nach einem oder mehreren der vorangegangenen Ansprüche 1 bis 9, dadurch gekennzeichnet, daß der Behälter (1) und/oder das Spannelement (2) im gegenseitigen Kontaktbereich eine wenigstens bereichsweise erhöhte Oberflächenrauhigkeit aufweisen, und daß die das Spannelement (2) formschlüssig untergreifende, schwingungsdämpfende Unterlage (4) aus einem Kunststoff oder dergleichen besteht.
